# EUROPEAN PATENT SPECIFICATION

(11) **EP 1 578 162 B1**
(45) Date of publication and mention of the grant of the patent: **20.02.2008**
(21) Application number: 04251163.4
(22) Date of filing: 27.02.2004
(51) Int. Cl.: H04Q 7/38, H04L 29/06

(54) **Method and system for facilitating a level-3 handoff**
Verfahren und System zur Besserung eines level-3 Weiterreichens
Procédé et système pour l'amélioration d'un transfert d'appel de niveau trois

(43) Date of publication of application: 21.09.2005
(60) Divisional application: 07118633.2
(73) Proprietor: Research In Motion Limited, Waterloo, Ontario N2L 3W8 (CA)
(72) Inventor: Buckley, Adrian, Brentwood, California 94513 (US); Dunk, Craig, Guelph, Ontario N1L 1P2 (CA); Kezys, Vytautas Robertas, Hamilton, Ontario L9K 1M3 (CA); Owen, Russell, Waterloo, Ontario N2K 4B8 (CA)
(74) Representative: Rickard, David John

(56) References cited:
- EP-A- 1 347 614
- GB-A- 2 288 301
- US-A1- 2002 105 926
- US-A1- 2004 028 009

## Description

The present invention relates to wireless mobile devices and, in particular, to a method and system for wireless channel selection by a mobile device.

Many of the mobile devices available today provide complex functionality far beyond simple voice communications. For example, many devices enable a user to access remote servers or sites over a public network, like the Internet. Some of these devices permit users to engage in Voice-over-IP (VoIP) telephone calls. Other devices allow users to receive streaming data from remote resources, such as streaming video or audio data.

This greater level of functionality, especially the receipt of real-time streamed data, presents particular quality of service issues. For example, the mobile device must ensure that the streamed data - such as a VoIP call - is maintained during roaming. Accordingly, when roaming within a network from one base station or cell to another base station or cell, the network must provide for certain latency in the communications to ensure that there is sufficient time to negotiate a handoff of the call between base stations without introducing noticeable delay into the streamed data.

A particular difficulty arises when the device roams from one network to another network of a different type. For example, the mobile device may initiate and establish a call within a General Packet Radio System (GPRS) network and may subsequently move geographically into an area served by a wireless local area network (WLAN) or EEEE802.11 coverage. Existing mobile devices may not be able to maintain the service being conducted over the call when the device switches the call to the new network.

US2002/4028009 teaches a method and system of performing a soft handoff of IP connections in a mobile device operating in a wireless network. The system determines whether a further connection is available by determining whether the mobile device is able to obtain connectivity to a gateway. Once the further connection is identified, the mobile device determines whether it should switch a service from an existing first IP connection to the further IP connection. The decision to switch the service over may be based upon a determination that the QoS of the existing IP connection is degrading, that tariffs for the further IP connection are favorable, or that services, such as bandwidth or security, etc. are desired and available via the further IP connection.

EP1347614 discloses a mobile node that receives cell-site transmitted signals and determines their channel quality while establishing a unicast packet session, and transmits a report to the current cell-site if there is at least one neighbor cell-site detected whose channel quality is higher than that of the current cell-site for informing the identifier and channel quality of the detected cell-site, and requesting the resource necessary to support the session.

### GENERAL

The present invention provides a method and mobile device for performing wireless channel selection that employs more than one concurrent level 2 interface to facilitate a level 3 handoff. The method and device maintain an active service over a first level 3 connection through a first transceiver, establish a second level 3 connection through a second transceiver, and then switch the service over to the second connection. To establish an appropriate level 3 connection, the mobile device may evaluate candidate channels against criteria associated with the active service to ensure quality of service can be maintained over the new connection. In some embodiments, the active service may be adapted to operate over a candidate channel having different characteristics from the existing channel.

In one aspect, the present invention provides a method of wireless channel selection by a mobile device, the mobile device communicating with a wireless network, comprising the steps of creating a first connection with the wireless network over a first channel; establishing a service between the mobile device and a remote point over said first connection; creating a second connection with the wireless network over a second channel; switching said service to said second connection; and terminating said first connection, wherein said step of creating a second connection includes selecting said second channel and evaluating characteristics of said second channel against service criteria associated with said service established over said first connection, and adapting said service to said characteristics of said second channel (92) if said characteristics of said second channel (92) do not meet said service criteria.

In another aspect the present invention provides a mobile device for wireless channel selection, the mobile device communicating with a wireless network, comprising: a first transceiver for creating a first connection with the wireless network over a first channel; a second transceiver for creating a second connection with the wireless network over a second channel; a switching module coupled to the first and second transceivers, said switching module directing said first transceiver to create said first connection, establishing a service between the mobile device and a remote point over said first connection, selecting said second channel, and directing said second transceiver to create said second connection; and a memory, said memory containing a list of candidate channels and their characteristics and containing service criteria associated with said service; wherein said switching module switches said service from said first connection to said second connection, and wherein said switching module reads said list of candidate channels and for at least one of said candidate channels compares its characteristics against said service criteria to select said second channel, and wherein said switching module (70) adapts said service to said characteristics of said second channel if said characteristics of said second channel do not meet said service criteria (74).

In a further aspect, the present invention provides a computer readable medium comprising code means for a computing for implementing the method in accordance with the invention.

Other aspects and features of the present invention will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present invention, and in which:
Figure 1 shows a block diagram of an embodiment of a mobile device and a wireless communication network;
Figure 2 which shows the block diagram of Figure 1 in a roaming context;
Figure 3 shows a block diagram of an embodiment of the mobile device;
Figure 4 shows a block diagram of an embodiment of a communication subsystem for the mobile device of Figure 3;

Figure 5 shows, in flowchart form, a method of wireless channel selection by a mobile device; and

Figure 6 shows, in flowchart form, a method of selecting a new candidate channel and switching a service to the new channel.

Similar reference numerals are used in different figures to denote similar components.

### DESCRIPTTON OF PREFERRED EMBODIMENTS

The following description of one or more specific embodiments of the invention does not limit the implementation of the invention to any particular computer programming language or system architecture. The present invention is not limited to any particular operating system, mobile device architecture, or computer programming language.

The following description makes reference to choosing a channel or operating a service over a channel. It will be understood that the term channel and the notion of selecting a channel is meant to encompass the selection of a channel from among different frequencies and/or channels.

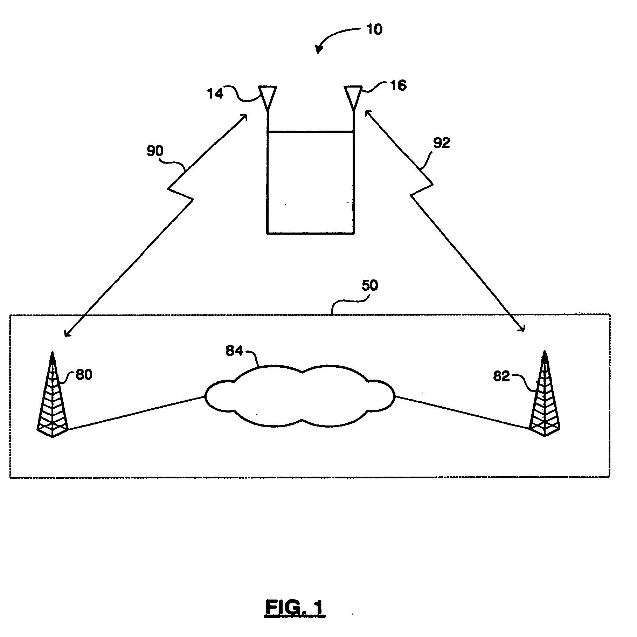

Reference is first made to Figure 1, which shows a mobile device 10 and a wireless communication network 50. The wireless communication network 50 includes a first base station 80 and a second base station 82 coupled to a core network 84. The core network 84 may include a collection of interconnected networks of different types. For example, the core network 84 may include a GPRS network coupled to a WLAN and to the Internet. It will be appreciated by those of ordinary skill in the art that the core network 84 may include a variety of other interconnected networks.

The mobile device 10 includes a first transceiver 14 and a second transceiver 16. The mobile device 10 is capable of establishing communications with the wireless communication network 50. For example, the first transceiver 14 may have a first link 90 with the first base station 80 and the second transceiver 16 may have a second link 92 with the second base station 82.

Under normal operations, the mobile device 10 employs one of the transceivers 14,16 to establish and maintain a link with a base station 80, 82. This link is used to maintain a communication service, such as, for example, a voice call. Accordingly, the mobile device 10 establishes a level 2 (L2) connection to the wireless communication network 50 over the link 90 or 92 and then establishes a level 3(L3) connection with an administrative domain to create the communication service. For example, the first transceiver 14 may have an active service over the first link 90 to the first base station 80, such as a VoIP session. This service operates over an L3 connection between the mobile device 10 and a remote location within the wireless communication network 50 using the first link 90.

The mobile device 10 may determine that it has moved into an area better served by another base station, in which case it will attempt to locate an alternative link to another base station. The mobile device 10 may make this decision as a result of signal strength monitoring according to the appropriate standard, as will be understood by those of ordinary skill in the art. The mobile device 10 may locate an available channel on the second base station 82 by scanning or through broadcast information received from the first base station 80. Once the mobile device 10 has located an alternative channel, the mobile device 10 tunes to that new channel and obtains broadcast information from the second base station 82. There may be multiple candidate channels.

Based on the broadcast information regarding the new channel, the mobile device 10 determines if the channel is available. The mobile device 10 also evaluates the characteristics of the channel against the type of service currently operating on the mobile device. The type of service may dictate that certain minimum channel characteristics are required from any candidate channel in order to maintain the service. For example, the type of service may be a high bandwidth service. In this case, a low bandwidth channel would be inappropriate. Other factors including cost and reachability may also factor into the decision. Reachability refers to the ability to reach the same entity within the wireless communication network 50 that is providing the active service.

Once the new channel is approved by the mobile device 10, the mobile device 10 requests resources from the wireless communications network 50. In other words, the mobile device 10 requests L2 and L3 connectivity. If resources are granted establishing a second link 92, then the mobile device 10 assesses whether the granted resources are sufficient to operate the service. If the resources are sufficient, then the existing service being operated over the first link 90 is switched to the second link 92.

In another embodiment, the second link 92 has characteristics different from the first link 90, such as a lower bandwidth or longer mean latency. The mobile device 10 may adapt the service to operate over the second link 92. In other words, the service is modified based upon the characteristics of the new channel. The adaptation may include changing the codec(s) used with regard to the service. For example, a service that involves audio and/or video may be modified to consume less bandwidth by modifying the codec used for the audio and/or the video, or by dropping the video and transmitting the audio only. It will be understood that other modification could be made to the service to ensure it operates successfully over a new channel having different characteristics.

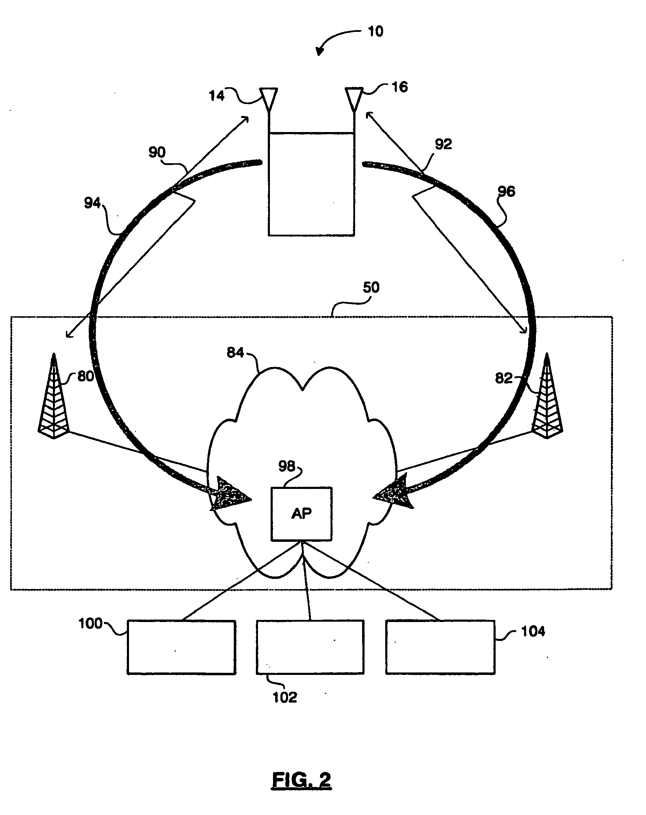

Reference is made to Figure 2, which shows the block diagram of Figure 1 in a roaming context. The core network 84 includes an anchor point 98. The anchor point 98 may be a router, server, or other node within the wireless communication network 50.

The anchor point 98 is coupled to one or more servers 100, 102, 104 that support a communication service. In another embodiment, the anchor point 98 is one of the servers 100, 102, or 104 providing a communication service. The communication service is represented by a first data stream 94 over the first link 90 to the anchor point 98. The anchor point 98 processes the first data stream 94 and transmits it to one or more of the servers 100, 102, 104.

When the mobile device 10 requests network resources to establish the second link 92, it seeks to establish a connection to the anchor point 98. In order to create the second link 92 and establish an L3 connection to support the transfer of the communication service, the mobile device 10 may require the allocation of an IP address to facilitate communication of packets from the anchor point 98 to the mobile device 10 over the second link 92. The request for resources may also incorporate authentication steps, authorization steps, and ensuring that there is sufficient bandwidth and that the level of latency is acceptable.

If these resources are granted, and if the mobile device 10 determines that the resources are adequate for supporting the existing communication service, then a second data stream 96 is established to support the communication service.

Accordingly, by establishing overlapping L2 connectivity, the mobile device 10 is able to select and obtain resources over a new channel and move a service over to the new channel without losing L3 connectivity. This minimizes latency in the handoff.

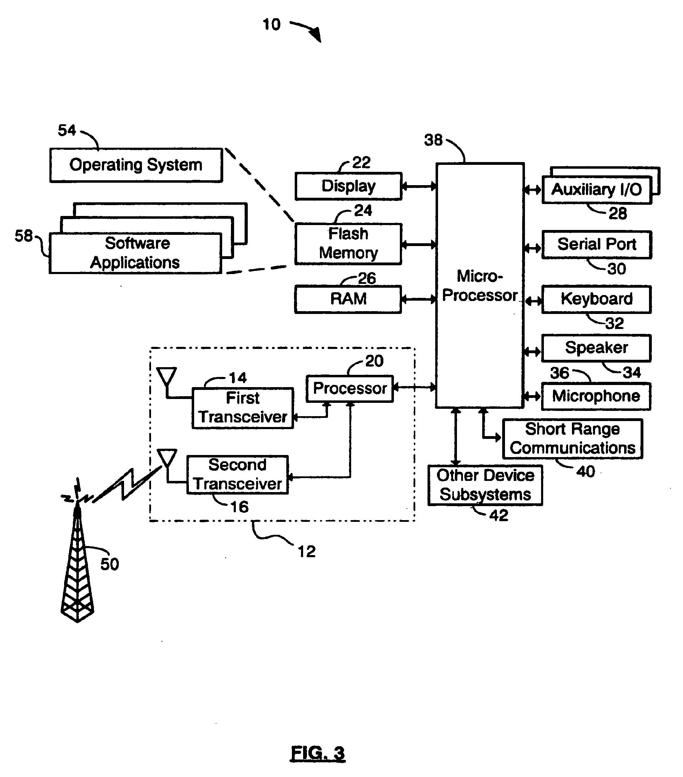

Reference is now made to Figure 3, which shows a block diagram of the mobile device 10 in an example embodiment. In this embodiment, the mobile device 10 has data and possibly also voice communication capabilities. In an example embodiment, the mobile device 10 has the capability to communicate with other computer systems on the Internet. Depending on the functionality provided by the device, in various embodiments the device may be a data communication device, a multiple-mode communication device configured for both data and voice communication, a mobile telephone, a PDA (personal digital assistant) enabled for wireless communication, or a computer system with a wireless modem, among other things.

In this embodiment, the mobile device 10 includes a communication subsystem 12, including a first transceiver 14, a second transceiver 16, and associated components such as a processor 20, which in one embodiment includes a digital signal processor (DSP). In some embodiments, the communication subsystem includes local oscillator(s) (LO) (not shown), and in some embodiments the communication subsystem 12 and a microprocessor 38 share an oscillator. As will be apparent to those skilled in the field of communications, the particular design of the communication subsystem 12 will be dependent upon the communication network in which the device is intended to operate. The transceivers 14, 16 may have separate antennae or may share an antenna.

Signals received by the antenna through the wireless communication network-50 are input to one of the transceivers 14 or 16, which may perform such common transceiver functions as signal amplification, frequency down conversion, filtering, and the like. In a similar manner, signals to be transmitted are processed, including modulation and encoding for example, by the processor 20 and input to one of the transceivers 14 or 16 for frequency up conversion, filtering, amplification and transmission over the wireless communication network 50.

The device 10 includes the microprocessor 38 that controls the overall operation of the device. The microprocessor 38 interacts with communications subsystem 12 and also interacts with further device subsystems such as the display 22, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42.

Some of the subsystems shown in Figure 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Those skilled in the art will appreciate that the operating system 54, software applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of software applications 58 which control basic device operations, including at least data and voice communication applications for example, will normally be installed on the device 10 during manufacture. Further software applications 58 may also be loaded onto the device 10 through the wireless communication network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 12 and input to the microprocessor 38, which will preferably further process the received signal for output to the display 22, or alternatively to an auxiliary I/O device 28. A user of device 10 may also compose data items within a software application 58, such as email messages for example, using the keyboard 32 in conjunction with the display 22 and possibly an auxiliary I/O device 28. Such composed items may then be transmitted over a communication network through the communication subsystem 12.

The serial port 30 in Figure 1 would normally be implemented in a personal digital assistant (PDA)-type communication device for which synchronization with a user's desktop computer (not shown) may be desirable, but is an optional device-component. Such a port 30 would enable a user to set preferences through an external device or software application and would extend the capabilities of the device by providing for information or software downloads to the device 10 other than through the wireless communication network 50.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices. The device 10 may be a handheld device.

Wireless communication network 50 is, in an example embodiment, a wireless packet data network, (e.g. Mobitex^{™} or DataTAC^{™}, which provides radio -coverage to mobile devices 10. Wireless communication network 50 may also be a voice and data network such as GSM (Global System for Mobile Communication), GPRS, CDMA.(Code Division Multiple Access), or various other third generation networks such as EDGE (Enhanced Data rates for GSM Evolution) or UMTS (Universal Mobile Telecommunications Systems).

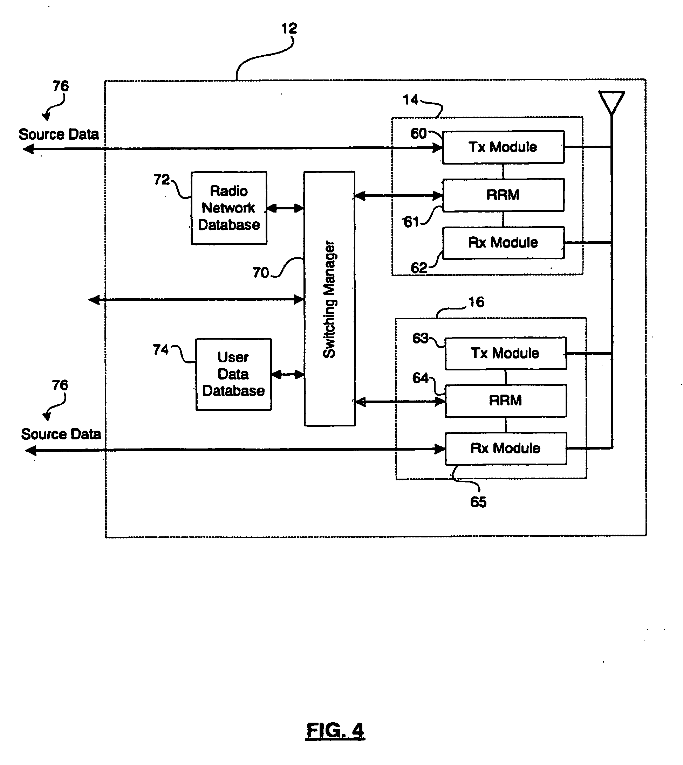

Reference is now made to Figure 4, which shows a block diagram of an embodiment of the communication subsystem 12. In addition to the first transceiver 14 and the second transceiver 16, the communications subsystem 12 includes a switching manager 70, a radio network database (RND) 72, and a user data database (UDD) 74. The first and second transceivers 14, 16 each include a transmit module 60, 63, a receive module 62, 65, and a radio resource sub-layer manager (RRM) 61, 64.

The switching manager 70 manages the connections between the mobile device 10 (Fig. 1) and the wireless communication network 50 (Fig. 1). The switching manager 70 requests dedicated resources for establishing data transfer and for coordinating information received on one or both of the transceivers 14, 16. It alerts one of the transceivers 14 or 16 when it is necessary to search for a new channel. The switching manager 70 also directs whether the source data 76 should go to the first or second transceiver 14, 16 for transmission. It may also perform mobility management functions, such as authentication.

The radio network database 72 stores information about the candidate channels that have been located and any broadcast information located. It may also store signal strength information. Accordingly, the radio network database 72 maintains up-to-date records of the potential channels and their characteristics.

The user data database 74 stores information regarding the attributes to be used in selecting a channel. These attributes may include signal strength, minimum bandwidth, mean bandwidth, minimum latency, mean latency, maximum latency, security settings, technology types, and other attributes.

Each radio resource sub-layer manager (RRM) 61, 64 is responsible for radio link control and medium access control (RLC/MAC). The RRMs 61, 64 instruct the receiver modules 63, 65 to scan the appropriate frequency bands. When a compatible channel is located, the RRM 61, 64 locates its broadcast information. If the broadcast information advertises any neighbour channels, then the RRM 61, 64 instructs the receiver module 63, 65 to tune to those channels as well to obtain their signal strengths and broadcast information. The RRM passes the information that it gathers from the located channels on to the switching manager 70, which then stores the information in the radio network database 72. The RRMs 61, 64 dynamically update the information in the radio network database 72 as the signal strengths of located channels change.

It will be understood that the various parts of the communication subsystem 12 shown in the block diagram of Figure 4 may be implemented by various other parts or subsystems shown in the block diagram of Figure 3. For example, the UDD 74 or the RND 72 may be stored within flash memory 24 (Fig. 3) or within RAM 26 (Fig. 3). The switching manager 70 may be implemented through the microprocessor 38 or through a dedicated purpose element, such as the processor 20.

The switching manager 70 selects the channel to be used for communications and sends control information to one of the transceivers 14, 16 instructing it to tune to the selected channel. The switching manager 70 also sends (via one of the transceivers 14,16) a request for resources. Once resources are granted, the switching manager 70 directs that the source data 76 should go to the tuned transceiver 14 or 16.

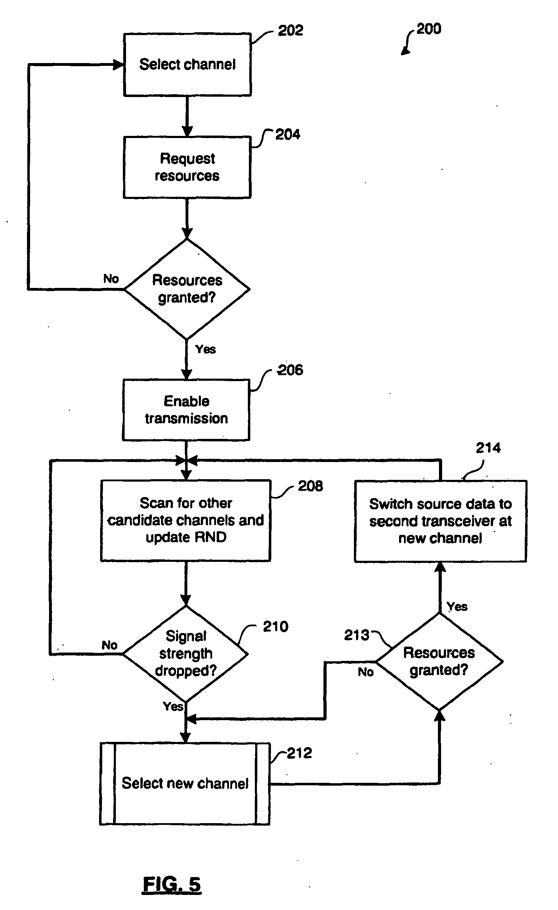

Reference is now made to Figure 5 in conjunction with Figure 4. Figure 5 shows, in flowchart form, a method 200 for wireless channel selection in accordance with the present invention. The method 200 begins in step 202, wherein the switching manager 70 selects one of the available channels and instructs the first transceiver 14 to tune to the selected channel. The switching manager 70 then sends a request for resources to the wireless communication network 50 in step 204 using the first transceiver 14. If the wireless communication network 50 grants the resources, then in step 206 the source data 76 is directed to the first transceiver 14 for transmission.

While a communication service, such as a VoIP call or other service, is established using the link set-up over the selected channel using the first transceiver 14, the second transceiver 16 is scanning the environment for alternative channels in step 208. The second transceiver 16 may scan any of the channels that were originally located by the first transceiver 14 or it may locate additional or new channels. It provides updated channel information to the switching manager 70 for storage in the radio network database 72. If the second transceiver 72 notes that previously located channels have become unavailable, due to loss of signal strength or loss of availability, then it will notify the switching manager 70 and the information in the radio network database 72 is updated accordingly. Those channels that become unavailable are marked as such and are later dropped altogether from the radio network database 72 if they are not relocated within a reasonable period of time.

While the second transceiver 16 scans available channels and the radio network database 72 is updated, the first transceiver 14 conducts signal strength monitoring on the selected channel over which the service is operating. If, in step 210, the first transceiver 14 detects that the signal strength has dropped below a threshold defined by the appropriate standard, then the method 200 proceeds to step 212 to select a new channel.

In steps 212, 213 and 214, the switching manager 70 selects a new candidate channel and instructs the second transceiver 16 to tune to the new channel. Once the second transceiver 16 has located the new channel it informs the switching manager 70 and the switching manager 70 sends a request for resources from the wireless communication network 50 (Fig. 1). Obtaining resources includes obtaining the necessary bearer channel, which includes establishing a level 3 network connection with the anchor point 98 (Fig. 2). The anchor point 98 is a point in the core network 84 (Fig. 2) that is already processing the first data stream 94 (Fig. 2) for the service operating over the first link 90 (Fig. 2). The anchor point 98 may be the server providing the service or may be an intermediate point in the core network 84. Establishing a level 3 network connection with the anchor point 98 may include allocation of a new IP address to the mobile device that may differ from the IP address used for the first link 90. Accordingly, if resources are granted, then the mobile device 10 will have two concurrent level 3 communication paths established with the wireless communication network 50.

If resources are granted, then the switching manager 70 causes the source data 76 to be routed to the second transceiver 16 for transmission.

If resources are not granted, then the switching manager 70 selects a new candidate channel and repeats the attempt to obtain resources.

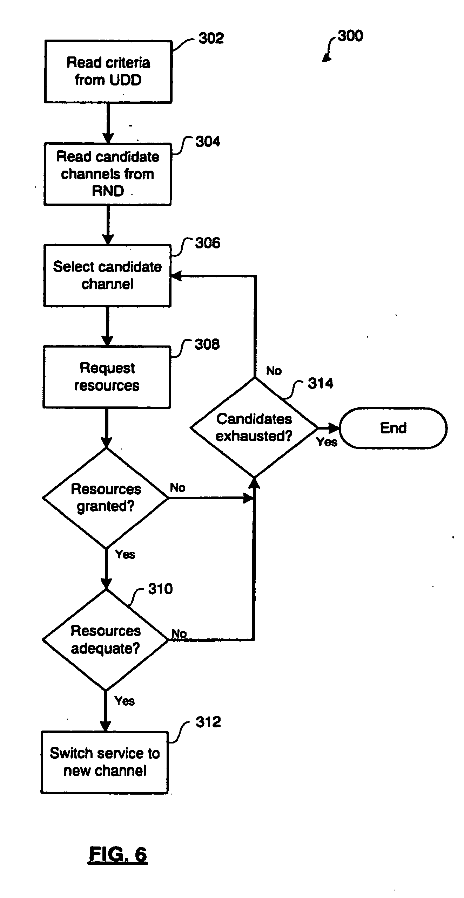

The steps of selecting a new channel and switching a service to that new channel shown in steps 212, 213 and 214 are shown in greater detail in Figure 6, which shows in flowchart form a method 300 of selecting a new candidate channel and switching a service to the new channel.

The method 300 begins when the switching manager 70 (Fig. 4) decides to select a new channel, such as for example in response to a drop in signal strength on a channel currently in use. In step 302, the switching manager 70 reads selection criteria from the user data database 74 (Fig. 4). The selection criteria reflect the channel characteristics necessary to maintain a certain quality of service based upon the type of service. The selection criteria may include the type of service being operated on the mobile device 10 (*i.*e. VoIP, streaming video, simple e-mail, etc.), the bandwidth requirements associated with the type of service (*i.e.* minimum bandwidth requirements for maintaining certain quality of service (QoS) standards), and any other channel characteristics associated with the type of service. Other channel characteristics may include latency associated with the link, security settings available, and technology types **(***i.e.* WLAN, GPRS, EDGE, W-CDMA, etc.).

In step 304, the switching manager 70 consults the radio network database 72 (Fig. 4) to determine which candidate channels are available. From among the candidate channels, the switching manager 70 selects a first candidate in step 306. The selection may be based upon a comparison of the characteristics of the channel stored in the radio network database 72 and the channel requirements provided by the user data database 74. Alternatively, the candidate channels stored in the radio network database 72 may be prefiltered by the switching manager 70 against the channel requirements during the regular updating of the radio network database 72. In such an embodiment, the radio network database 72 would only contain candidate channels that appear to meet the channel requirements. Therefore, the switching manager 70 may select any one of the candidate channels. An appropriate algorithm may be employed to select from among multiple candidate channels. The algorithm may take into account bandwidth, signal strength, and any other characteristic information regarding the candidate channel.

Having selected a candidate channel, in step 308, the switching manager 70 instructs the second transceiver to locate the candidate channel and sends a request for resources to the wireless network 50. If resources are refused then the switching manager 70 tries the next candidate channel. If resources are granted, then in step 310 the switching manager 70 may compare the granted resources against the channel requirements obtained in step 302 and may accept or reject the candidate channel. If the channel is rejected, then the switching manager 70 tries the next candidate channel.

If the resources granted are adequate, then in step 312 the service is switched to the newly established connection over the new candidate channel. Once the service has been switched to the new channel using the second transceiver 16 (Fig. 1), the connection using the first transceiver 14 (Fig. 1) is dropped and the first transceiver 14 assumes the role of scanning for new candidate channels and updating the radio network database 72. The overlapping level 3 connectivity that results from the method 300 provides for a low latency handoff of the service.

In step 314, if the candidate channels have been exhausted without finding an acceptable channel, then the handoff fails and the service remains on the original channel.

In another embodiment, if the candidate channels and/or the resources granted are insufficient to meet the service criteria, then the switching manager 70 may direct that the service be altered or adapted to function over the available channels. For example, a service involving streaming video data may need to be changed to streaming audio only or streaming video at a lower resolution or refresh rate in order to function appropriately over a narrower bandwidth connection.

The present invention may be embodied in other specific forms without departing from the essential characteristics thereof. Certain adaptations and modifications of the invention will be obvious to those skilled in the art. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method of wireless channel selection by a mobile device (10), the mobile device (10) communicating with a wireless network (50), comprising the steps of creating a first connection with the wireless network (50) over a first channel (90); establishing a service between the mobile device (10) and a remote point over said first connection; creating a second connection with the wireless network (50) over a second channel (92); switching said service to said second connection; and terminating said first connection, wherein said step of creating a second connection comprises selecting said second channel (92) and evaluating characteristics of said second channel (92) against service criteria associated with said service established over said first connection, and adapting said service to said characteristics of said second channel (92) if said characteristics of said second channel (92) do not meet said service criteria.

2. The method as claimed in claim 1, wherein said characteristics comprise bandwidth and said service criteria comprise a minimum bandwidth requirement.

3. The method as claimed in any preceding claim, wherein said characteristics comprise latency and said service criteria comprise a latency requirement.

4. The method as claimed in any preceding claim, wherein said characteristics comprise mean bandwidth and said service criteria comprise a mean bandwidth requirement.

5. The method as claimed in any preceding claim, wherein said characteristics comprise security settings and said service criteria comprise security settings requirements.

6. The method as claimed in any preceding claim, wherein said service comprises audio and video, and wherein said step of adapting comprises dropping said video to transmit said audio only.

7. The method as claimed in any one of claims 1 to 5, wherein said service comprises the transmission of encoded media and wherein said step of adapting comprises modifying a codec used to encode and decode said encoded media.

8. The method as claimed in any preceding claim, wherein said step of creating a second connection comprises the steps of selecting said second channel (92) and requesting resources from the wireless network (50).

9. The method as claimed in any preceding claim, wherein the wireless network (50) comprises an anchor point (98) and wherein said first connection comprises a first path (94) to said anchor point (98), and wherein said step of creating a second connection comprises establishing a second path (96) to said anchor point (98).

10. A mobile device (10) for wireless channel selection, the mobile device (10) communicating with a wireless network (50), comprising:
a first transceiver (14) for creating a first connection with the wireless network (50) over a first channel;
a second transceiver (16) for creating a second connection with the wireless network (50) over a second channel;
a switching module (70).coupled to the first and second transceivers (14, 16), said ., switching module (70) directing said first transceiver (14) to create said first connection, establishing a service between the mobile device (10) and a remote point over said first connection, selecting said second channel, and directing said second transceiver (16) to create said second connection; and
a memory, said memory containing a list (72) of candidate channels and their characteristics and containing service criteria (74) associated with said service;
wherein said switching module (70) switches said service from said first connection to said second connection, and wherein
said switching module (70) reads said list (72) of candidate channels and for at least one of said candidate channels compares its characteristics against said service criteria (74) to select said second channel,
and wherein said switching module (70) adapts said service to said characteristics of said second channel if said characteristics of said second channel do not meet said service criteria (74).

11. The mobile device as claimed in claim 10, wherein said switching module (70) directs said first transceiver (14) to terminate said first connection once said service is switched to said second connection.

12. The mobile device as claimed in claim 10 or 11, wherein said characteristics comprise bandwidth and said service criteria (74) comprise a minimum bandwidth requirement.

13. The mobile device as claimed in any one of claims 10 to 12, wherein said characteristics comprise latency and said service criteria (74) comprise a latency requirement.

14. The mobile device as claimed in any one of claims 10 to 13, wherein said characteristics comprise mean bandwidth and said service criteria (74) comprise a mean bandwidth requirement.

15. The mobile device as claimed in any one of claims 10 to 14, wherein said characteristics comprise security settings and said service criteria (74) comprise security settings requirements.

16. The mobile device claimed in any one of claims 10 to 15, wherein said service comprises audio and video, and wherein said switching module (70) adapts said service by dropping said video to transmit said audio only.

17. The mobile device claimed in any one of claims 10 to 15, wherein said service comprises the transmission of encoded media and wherein said switching module (70) adapts said service by modifying a codec used to encode and decode said encoded media.

18. The mobile device as claimed in any one of claims 10 to 17, wherein said switching module (70) outputs a request for resources to said second transceiver (16) for transmission to the wireless network (50) to establish said second connection.

19. The mobile device as claimed in any one of claims 10 to 18, wherein the wireless network (50) comprises an anchor point (98) and wherein said first connection comprises a first path (94) to said anchor point (98), and wherein said second connection comprises a second path (96) to said anchor point (98).

20. A computer readable medium comprising code means executable in a processor (38) of a computing device for implementing the method of any of claims 1 to 9.

## Patentansprüche

1. Verfahren zur Drahtloskanalauswahl durch ein Mobilgerät (10), wobei das Mobilgerät (10) mit einem Drahtlosnetz (50) kommuniziert, und das Verfahren die folgenden Schritte umfasst: das Erzeugen einer ersten Verbindung mit dem Drahtlosnetz (50) über einen ersten Kanal (90); das Einrichten eines Dienstes zwischen dem Mobilgerät (10) und einem entfernten Punkt über die erste Verbindung; das Erzeugen einer zweiten Verbindung mit dem Drahtlosnetz (50) über einen zweiten Kanal (92); das Umschalten des Dienstes zu der zweiten Verbindung; und das Beenden der ersten Verbindung, wobei
der Schritt des Erzeugens einer zweiten Verbindung umfasst: das Auswählen des zweiten Kanals (92) und das Auswerten von charakteristischen Merkmalen des zweiten Kanals (92) in Bezug auf Dienstkriterien, die mit dem über die erste Verbindung eingerichteten Dienst assoziiert sind, und das Anpassen des Dienstes an die charakteristischen Merkmale des zweiten Kanals (92), wenn die charakteristischen Merkmale des zweiten Kanals (92) nicht die Dienstkriterien erfüllen.

2. Verfahren gemäß Anspruch 1, wobei die charakteristischen Merkmale die Bandbreite umfassen und die Dienstkriterien eine Anforderung für die minimale Bandbreite umfassen.

3. Verfahren gemäß jedem der vorherigen Ansprüche, wobei die charakteristischen Merkmale die Latenzzeit umfassen und die Dienstkriterien eine Anforderung für die Latenzzeit umfassen.

4. Verfahren gemäß jedem der vorherigen Ansprüche, wobei die charakteristischen Merkmale die mittlere Bandbreite umfassen und die Dienstkriterien eine Anforderung für die mittlere Bandbreite umfassen.

5. Verfahren gemäß jedem der vorherigen Ansprüche, wobei die charakteristischen Merkmale Sicherheitseinstellungen umfassen und die Dienstkriterien Anforderungen für die Sicherheitseinstellungen umfassen.

6. Verfahren gemäß jedem der vorherigen Ansprüche, wobei der Dienst Audio und Video umfasst, und wobei der Schritt des Anpassens das Fallenlassen des Videos umfasst, um ausschließlich das Audio zu übertragen.

7. Verfahren gemäß jedem der Ansprüche 1 bis 5, wobei der Dienst die Übertragung von codierten Medien umfasst, und wobei der Schritt des Anpassens das Modifizieren eines Codecs umfasst, der zum Codieren und Decodieren der codierten Medien verwendet wird.

8. Verfahren gemäß jedem der vorherigen Ansprüche, wobei der Schritt des Erzeugens einer zweiten Verbindung die Schritte des Auswählens des zweiten Kanals (92) und des Anforderns von Ressourcen von dem Drahtlosnetz (50) umfasst.

9. Verfahren gemäß jedem der vorherigen Ansprüche, wobei das Drahtlosnetz (50) einen Ankerpunkt (98) umfasst, und wobei die erste Verbindung einen ersten Pfad (94) zu dem Ankerpunkt (98) umfasst, und wobei der Schritt des Erzeugens einer zweiten Verbindung das Einrichten eines zweiten Pfads (96) zu dem Ankerpunkt (98) umfasst.

10. Mobilgerät (10) zur Drahtloskanalauswahl, wobei das Mobilgerät (10) mit einem Drahtlosnetz (50) kommuniziert, umfassend:
eine erste Sendeempfangseinrichtung (14) zum Erzeugen einer ersten Verbindung mit dem Drahtlosnetz (50) über einen ersten Kanal;
eine zweite Sendeempfangseinrichtung (16) zum Erzeugen einer zweiten Verbindung mit dem Drahtlosnetz (50) über einen zweiten Kanal;
ein Umschaltmodul (70), das mit der ersten und der zweiten Sendeempfangseinrichtung (14, 16) gekoppelt ist, wobei das Umschaltmodul (70) die erste Sendeempfangseinrichtung (14) zum Erzeugen der ersten Verbindung anweist, einen Dienst zwischen dem Mobilgerät (10) und einem entfernten Punkt über die erste Verbindung einrichtet, den zweiten Kanals auswählt und die zweite Sendeempfangseinrichtung (16) zum Erzeugen der zweiten Verbindung anweist; und
einen Speicher, wobei der Speicher eine Liste (72) von Kandidatenkanälen und deren charakteristischen Merkmalen enthält und Dienstkriterien (74) enthält, die mit dem Dienst assoziiert sind;
wobei das Umschaltmodul (70) den Dienst von der ersten Verbindung zur zweiten Verbindung umschaltet, und
wobei das Umschaltmodul (70) die Liste (72) von Kandidatenkanälen liest und für mindestens einen der Kandidatenkanäle dessen charakteristische Merkmale mit den Dienstkriterien (74) vergleicht, um den zweiten Kanal auszuwählen,
und wobei das Umschaltmodul (70) den Dienst an die charakteristischen Merkmale des zweiten Kanals anpasst, wenn die charakteristischen Merkmale des zweiten Kanals nicht die Dienstkriterien (74) erfüllen.

11. Mobilgerät gemäß Anspruch 10, wobei das Umschaltmodul (70) die erste Sendeempfangseinrichtung (14) anweist, die erste Verbindung zu beenden, sobald der Dienst zu der zweiten Verbindung umgeschaltet wurde.

12. Mobilgerät gemäß Anspruch 10 oder 11, wobei die charakteristischen Merkmale die Bandbreite umfassen und die Dienstkriterien (74) eine Anforderung für die minimale Bandbreite umfassen.

13. Mobilgerät gemäß jedem der Ansprüche 10 bis 12, wobei die charakteristischen Merkmale die Latenzzeit umfassen und die Dienstkriterien (74) eine Anforderung für die Latenzzeit umfassen.

14. Mobilgerät gemäß jedem der Ansprüche 10 bis 13, wobei die charakteristischen Merkmale die mittlere Bandbreite umfassen und die Dienstkriterien (74) eine Anforderung für die mittlere Bandbreite umfassen.

15. Mobilgerät gemäß jedem der Ansprüche 10 bis 14, wobei die charakteristischen Merkmale Sicherheitseinstellungen umfassen und die Dienstkriterien (74) Anforderungen für die Sicherheitseinstellungen umfassen.

16. Mobilgerät gemäß jedem der Ansprüche 10 bis 15, wobei der Dienst Audio und Video umfasst, und wobei das Umschaltmodul (70) den Dienst anpasst, indem das Video fallengelassen wird, um ausschließlich das Audio zu übertragen.

17. Mobilgerät gemäß jedem der Ansprüche 10 bis 15, wobei der Dienst die Übertragung von codierten Medien umfasst, und wobei das Umschaltmodul (70) den Dienst anpasst, indem ein Codec modifiziert wird, der zum Codieren und Decodieren der codierten Medien verwendet wird.

18. Mobilgerät gemäß jedem der Ansprüche 10 bis 17, wobei das Umschaltmodul (70) eine Anforderung für Ressourcen an die zweite Sendeempfangseinrichtung (16) zur Übertragung an das Drahtlosnetz (50) ausgibt, um die zweite Verbindung einzurichten.

19. Mobilgerät gemäß jedem der Ansprüche 10 bis 18, wobei das Drahtlosnetz (50) einen Ankerpunkt (98) umfasst, und wobei die erste Verbindung einen ersten Pfad (94) zu dem Ankerpunkt (98) umfasst, und wobei die zweite Verbindung einen zweiten Pfad (96) zu dem Ankerpunkt (98) umfasst.

20. Computerlesbares Medium, das Codemittel umfasst, die durch einen Prozessor (38) eines Computergeräts ausführbar sind, um das Verfahren gemäß jedem der Ansprüche 1 bis 9 zu implementieren.

## Revendications

1. Procédé de sélection de canal sans fil par un dispositif mobile (10), le dispositif mobile (10) communiquant avec un réseau sans fil (50), comprenant les étapes de création d'une première connexion avec le réseau sans fil (50) sur un premier canal (90) ; d'établissement d'un service entre le dispositif mobile (10) et un point distant sur ladite première connexion ; de création d'une seconde connexion avec le réseau sans fil (50) sur un second canal (92) ; de commutation dudit service sur ladite seconde connexion; et d'interruption de ladite première connexion, dans lequel
ladite étape de création d'une seconde connexion comprend la sélection dudit second canal (92) et l'évaluation de caractéristiques dudit second canal (92) par rapport à des critères de service associés au dit service établi sur ladite première connexion, et l'adaptation dudit service aux dites caractéristiques dudit second canal (92) si lesdites caractéristiques dudit second canal (92) ne répondent pas aux dits critères de service.

2. Procédé tel que revendiqué à la revendication 1, dans lequel lesdites caractéristiques comprennent une largeur de bande et lesdits critères de service comprennent une exigence de largeur de bande minimum.

3. Procédé tel que revendiqué dans l'une quelconque des revendications précédentes, dans lequel lesdites caractéristiques comprennent une latence et lesdits critères de service comprennent une exigence de latence.

4. Procédé tel que revendiqué dans l'une quelconque des revendications précédentes, dans lequel lesdites caractéristiques comprennent une largeur de bande moyenne et lesdits critères de service comprennent une exigence de largeur de bande moyenne.

5. Procédé tel que revendiqué dans l'une quelconque des revendications précédentes, dans lequel lesdites caractéristiques comprennent des paramètres de sécurité et lesdits critères de service comprennent des exigences de paramètres de sécurité.

6. Procédé tel que revendiqué dans l'une quelconque des revendications précédentes, dans lequel ledit service comprend un élément audio et un élément vidéo, et dans lequel ladite étape d'adaptation comprend l'abandon dudit élément vidéo pour transmettre uniquement ledit élément audio.

7. Procédé tel que revendiqué dans l'une quelconque des revendications 1 à 5, dans lequel ledit service comprend la transmission de supports codés et dans lequel ladite étape d'adaptation comprend la modification d'un codec utilisé pour coder et décoder lesdits supports codés.

8. Procédé tel que revendiqué dans l'une quelconque des revendications précédentes, dans lequel ladite étape de création d'une seconde connexion comprend les étapes de sélection dudit second canal (92) et de demande de ressources auprès du réseau sans fil (50).

9. Procédé tel que revendiqué dans l'une quelconque des revendications précédentes, dans lequel le réseau sans fil (50) comprend un point d'ancrage (98) et dans lequel ladite première connexion comprend un premier parcours (94) vers ledit point d'ancrage (98), et dans lequel ladite étape de création d'une seconde connexion comprend l'établissement d'un second parcours (96) vers ledit point d'ancrage (98).

10. Dispositif mobile (10) pour une sélection de canal sans fil, le dispositif mobile (10) communiquant avec un réseau sans fil (50), comprenant :
un premier émetteur-récepteur (14) pour créer une première connexion avec le réseau sans fil (50) sur un premier canal ;
un second émetteur-récepteur (16) pour créer une seconde connexion avec le réseau sans fil (50) sur un second canal ;
un module de commutation (70) couplé aux premier et second émetteurs-récepteurs (14, 16), ledit module de commutation (70) commandant au dit premier émetteur-récepteur (14) de créer ladite première connexion, établissant un service entre le dispositif mobile (10) et un point distant sur ladite première connexion, sélectionnant ledit second canal, et commandant au dit second émetteur-récepteur (16) de créer ladite seconde connexion ; et
une mémoire, ladite mémoire contenant une liste (72) de canaux candidats et leurs caractéristiques et contenant des critères de service (74) associés au dit service ;
dans lequel ledit module de commutation (70) commute ledit service de ladite première connexion à ladite seconde connexion, et dans lequel
ledit module de commutation (70) lit ladite liste (72) de canaux candidats et pour au moins un desdits canaux candidats compare ses caractéristiques par rapport aux dits critères de service (74) pour sélectionner ledit second canal,
et dans lequel ledit module de commutation (70) adapte ledit service aux dites caractéristiques dudit second canal si lesdites caractéristiques dudit second canal ne répondent pas aux dits critères de service (74).

11. Dispositif mobile tel que revendiqué à la revendication 10, dans lequel ledit module de commutation (70) commande au dit premier émetteur-récepteur (14) d'interrompre ladite première connexion une fois que ledit service est commuté sur ladite seconde connexion.

12. Dispositif mobile tel que revendiqué à la revendication 10 ou 11, dans lequel lesdites caractéristiques comprennent une largeur de bande et lesdits critères de service (74) comprennent une exigence de largeur de bande minimum.

13. Dispositif mobile tel que revendiqué dans l'une quelconque des revendications 10 à 12, dans lequel lesdites caractéristiques comprennent une latence et lesdits critères de service (74) comprennent une exigence de latence.

14. Dispositif mobile tel que revendiqué dans l'une quelconque des revendications 10 à 13, dans lequel lesdites caractéristiques comprennent une largeur de bande moyenne et lesdits critères de service (74) comprennent une exigence de largeur de bande moyenne.

15. Dispositif mobile tel que revendiqué dans l'une quelconque des revendications 10 à 14, dans lequel lesdites caractéristiques comprennent des paramètres de sécurité et lesdits critères de service (74) comprennent des exigences de paramètres de sécurité.

16. Dispositif mobile tel que revendiqué dans l'une quelconque des revendications 10 à 15, dans lequel ledit service comprend un élément audio et un élément vidéo, et dans lequel ledit module de commutation (70) adapte ledit service en abandonnant ledit élément vidéo pour transmettre uniquement ledit élément audio.

17. Dispositif mobile tel que revendiqué dans l'une quelconque des revendications 10 à 15, dans lequel ledit service comprend la transmission de supports codés et dans lequel ledit module de commutation (70) adapte ledit service en modifiant un codec utilisé pour coder et décoder lesdits supports codés.

18. Dispositif mobile tel que revendiqué dans l'une quelconque des revendications 10 à 17, dans lequel ledit module de commutation (70) produit une demande de ressources au dit second émetteur-récepteur (16) pour une transmission au réseau sans fil (50) pour établir ladite seconde connexion.

19. Dispositif mobile tel que revendiqué dans l'une quelconque des revendications 10 à 18, dans lequel le réseau sans fil (50) comprend un point d'ancrage (98) et dans lequel ladite première connexion comprend un premier parcours (94) vers ledit point d'ancrage (98), et dans lequel ladite seconde connexion comprend un second parcours (96) vers ledit point d'ancrage (98).

20. Support lisible par ordinateur comprenant des moyens de code exécutables dans un processeur (38) d'un dispositif informatique pour mettre en oeuvre le procédé de l'une quelconque des revendications 1 à 9.
